Europäisches Patentamt

European Patent Office

Office européen des brevets

(11) Publication number: **0 436 039 A1**

(12) # EUROPEAN PATENT APPLICATION
## published in accordance with Art. 158(3) EPC

(21) Application number: **90910933.2**

(22) Date of filing: **12.07.90**

(86) International application number:
**PCT/JP90/00903**

(87) International publication number:
**WO 91/01519 (07.02.91 91/04)**

(51) Int. Cl.5: **G05B 19/403**

(30) Priority: **21.07.89 JP 190178/89**

(43) Date of publication of application:
**10.07.91 Bulletin 91/28**

(84) Designated Contracting States:
**DE FR GB**

(71) Applicant: **FANUC LTD.**
**3580, Shibokusa Aza-Komamba Oshino-mura**
**Minamitsuru-gun, Yamanashi 401-05(JP)**

(72) Inventor: **FUJITA, Naoki Fanuc Mansion**
**Harimomi 6-203**

**3537-1, Shibokusa Oshinomura**
**Minamitsuru-gun**
**Yamanashi 401-05(JP)**
Inventor: **WATANABE, Hiroyuki Gureisuhiruzu**
**201**
**502-28, Maedacho Totsukaku Yokohama-shi**
**Kanagawa 244(JP)**

(74) Representative: **Brunner, Michael John et al**
**GILL JENNINGS & EVERY 53-64 Chancery**
**Lane**
**London WC2A 1HN(GB)**

(54) **SYSTEM FOR RESUMING PROGRAM FOR AUTOMATIC OPERATION.**

(57) A system for resuming a program for automatic operation of a numerical controller. A program to be resumed is selected (S1), and a tool path is drawn on a display screen according to the program (S2). Then, the tool path is stopped in a resuming position (S3) and the operation by the program is resumed (S4). Therefore, motion of the tool and a block to be resumed can be easily specified on the display screen without any particular knowledge concerning programs of numerical controllers.

Fig. 1

EP 0 436 039 A1

## PROGRAM RESUMING SYSTEM FOR AUTOMATIC OPERATION

TECHNICAL FIELD

The present invention relates to a program resuming system for an automatic operation in a numerical control apparatus, and more specifically, to a program resuming system for an automatic operation by which a resuming position is determined by a locus of a tool drawn at a screen display.

BACKGROUND ART

In a numerical control apparatus, when a tool breaks during machining or the machining must be resumed after an interruption, the machining must be resumed from a midway point in a program. This function is called a program resuming function.

The processing carried out by this function is divided into the following steps:

(a) the operator designates a block from which the operation is to be resumed;

(b) The head portion of the designated block of the program is automatically decoded and the operating state in the block is internally created; and

(c) the program is executed from the block in the above internally created operating state.

In a prior art, a block from which the operation is to be resumed is conventionally designated by one of the following methods.

In a first method, a sequence number in the block from which the operation is to be resumed is designated.

In the second method, a block number from the head of the program of the block from which the operation is to be resumed is designated.

The following problems arise, however, in the above methods. Namely, when a program is not provided with sequence numbers, the designation according to the first method cannot be carried out. When a program is complex, i.e., when the program is "too long" or contains a "macro sentence", a block number from which the operation should be resumed cannot be easily found, and further when a block from which the operation should be resumed is protected and cannot be displayed at a display screen, there is no way in which the block can be designated.

In particular, a machining program created by an interactive type programming function is very long and composed of a very complex macro sentence, which macro sentence itself is often protected, and sometimes the operator cannot understand an NC sentence. That is, when the operator does not know the details of the NC program, the operator cannot always identify a particular block which actually corresponds to a particular machining step.

Namely, the use of the program resuming function according to the conventional designating methods is limited only to operators who know the details of a machining program.

DISCLOSURE OF THE INVENTION

Taking the above into consideration, an object of the present invention is to provide a program resuming system for an automatic operation by which a block from which the operation is to be resumed is designated by making use of a drawing function.

To solve the above problem, according to the present invention, there is provided a program resuming system for an automatic operation in a numerical control apparatus, which comprises the steps of selecting a program to be resumed and causing the program to draw a tool locus at a display screen, stopping the tool locus at a resuming position, and resuming the operation of the program.

The tool locus is drawn at the display screen to designate the block from which the operation is to be resumed, and as a result, the block from which the operation is to be resumed can be easily designated by a movement of the tool and the display screen, without the need for a special knowledge of a program of the numerical control apparatus.

BRIEF DESCRIPTION OF THE DRAWINGS
Figure 1 is a schematic flowchart of a program resuming system for an automatic operation according to the present invention;
Figure 2 is a diagram showing an example of a display screen at which a tool locus is drawn; and
Figure 3 is a diagram of a schematic arrangement of hardware of a numerical control apparatus embodying the present invention.
BEST MODE OF CARRYING OUT THE INVENTION

An embodiment of the present invention will be described below with reference to the drawings.

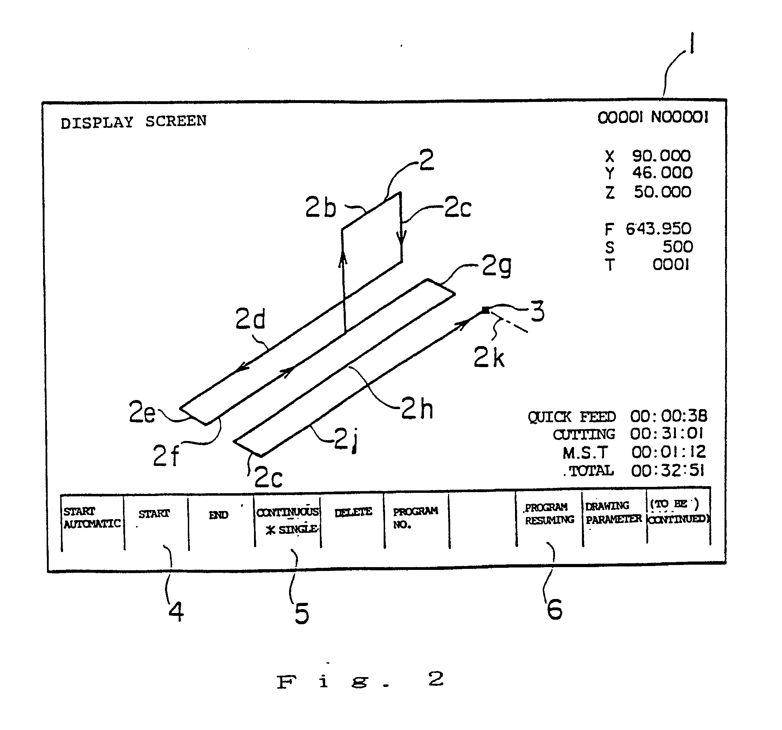

Figure 2 is a diagram showing an example of a display screen at which a tool locus is drawn, wherein a locus 2 of a tool is drawn at a display screen 1 and the respective elements 2b to 2j of the locus 2 correspond to a block of each NC execution sentence, and therefore, the operator can determine from the locus 2 a block from which the operation of a program is to be resumed. More specifically, when the operator causes the locus to be drawn and stopped in the vicinity of the end point of the block from which the operation is to be resumed, a numerical control apparatus executes the drawing of the locus 2 of the tool to the end point of the block and stops the drawing. In the figure, the drawing is stopped at the end point of the locus 2j and a block cursor 3 is stopped at the point. Therefore, if the operator depresses a program resuming button 6 at this point, the machining is resumed from the block corresponding to the locus 2k.

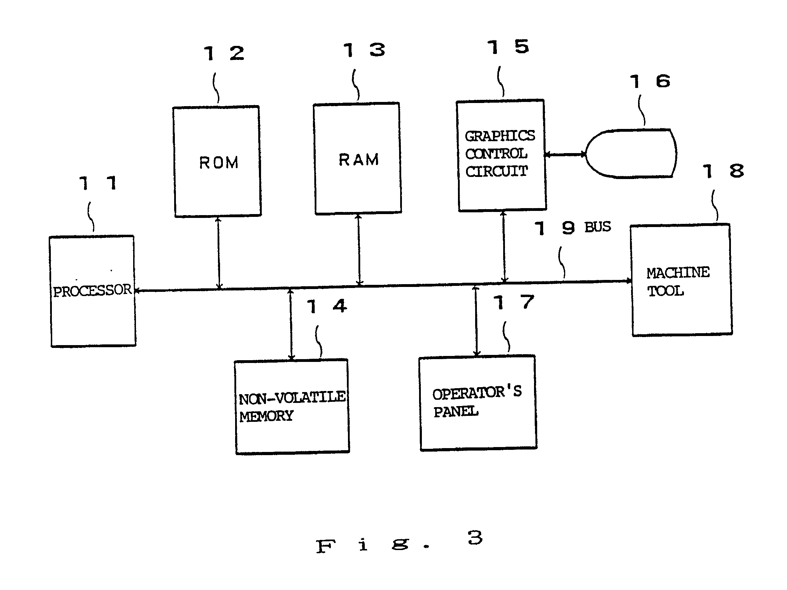

Figure 3 is a diagram of a schematic arrangement of hardware of the numerical control apparatus embodying the present invention. In Figure 3, a processor 11 controls the numerical control apparatus as a whole, in accordance with a system program stored in a ROM 12, which is an EPROM or EEPROM. A RAM 13 is composed of a DRAM, or the like, in which various data or I/O signals are stored, and a non-volatile memory 14 is composed of a CMOS which stores programs, parameters, amounts of pitch error correction, amounts of tool correction, and the like. The CMOS is a non-volatile memory and must be maintained operative even after a power supply thereto is cut off and therefore is also supplied with power from a battery.

A graphic control circuit 15 converts digital signals into signals for display, and supplies those signals to a display 16. A CRT or liquid crystal display is used as the display 16 to draw the locus 2 of the tool. Further, the display 16 displays the position of each axis, the state of I/O signals, parameters, and the like. An operator's panel 17 composed of a keyboard or the like is used to interactively input various data and operate a machine tool 18. These components are interconnected through a bus 19.

Note that components such as an axis control circuit, servo amplifiers, spindle amplifiers, a PMC (programmable machine controller), and the like are not shown in Figure 3. Further, a plurality of processors may be used, to provide a multi-processor system.

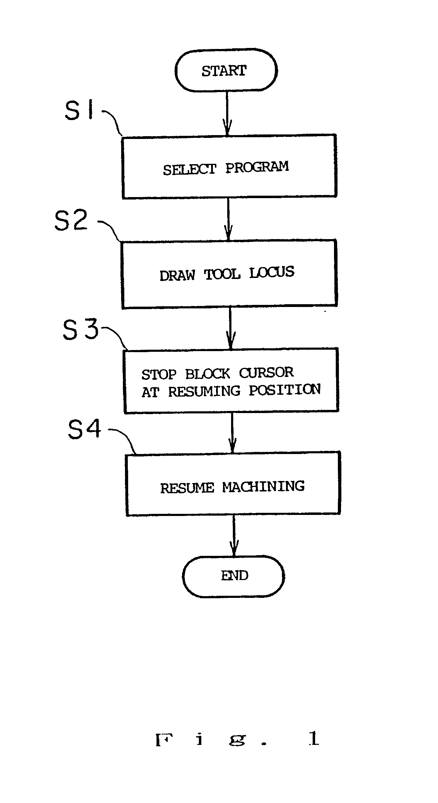

Figure 1 is a schematic flowchart of a program resuming system for an automatic operation according to the present invention, wherein numerals prefixed with an "S" indicate the numbers of the steps of the system.

[S1] After it is confirmed that the tool is a safe distance from a workpiece, a memory mode is set at step 1 to select a program to be resumed.

[S2] A start button 4 shown in Figure 2 is depressed, and the numerical control apparatus then executes the tool locus of the selected program as shown in Figure 2.

[S3] When a position in the vicinity of the resuming position is reached, a single button 5 is depressed to stop the numerical control apparatus at the end of the locus of the block being drawn. In the example of Figure 2, the numerical control apparatus is stopped at the block 2j. The stop position is not always correct, and thus the key " " or " " of the operator's panel 17 can be depressed to advance or retract the drawing of the locus by a block. Therefore, a block cursor 3 can be stopped at the accurate resuming position by using these keys.

[S4] Here, an amount of tool correction, a G code, and the like are changed, if necessary, and when a program resuming button 6 is depressed, the numerical control apparatus then changes the display at the display screen to a display for resuming the program, i.e., a display showing an NC sentence, and displays a cursor at the block from which the operation is to be resumed at step 4.

The operator then depresses the cycle start button (not shown) on a machine control panel, and the program is executed from the block indicated by the cursor.

As described above, according to the present invention, since the block from which the operation is to be resumed is designated by drawing the tool locus at the display screen, the block from which the operation is to be resumed can be easily designated without the need for confirming a sequence number and the like, and an error in designating the block from which the operation is to be resumed can be prevented.

## Claims

1. A program resuming system for an automatic operation in a numerical control apparatus, comprising the steps of:
   selecting a program to be resumed and causing said program to draw a tool locus at a display screen;
   stopping said tool locus at a resuming position; and
   resuming the operation of said program.

2. A program resuming system for an automatic operation according to claim 1 wherein, when said tool locus is stopped at the resuming position, said tool locus is advanced or retracted by one block by depressing particular keys.

START

S1 SELECT PROGRAM

S2 DRAW TOOL LOCUS

S3 STOP BLOCK CURSOR
AT RESUMING POSITION

S4 RESUME MACHINING

END

Fig. 1

Fig. 2

Fig. 3

# INTERNATIONAL SEARCH REPORT

International Application No PCT/JP90/00903

## I. CLASSIFICATION OF SUBJECT MATTER (if several classification symbols apply, indicate all) ⁶

According to International Patent Classification (IPC) or to both National Classification and IPC

Int. Cl⁵     G05B19/403

## II. FIELDS SEARCHED

### Minimum Documentation Searched ⁷

| Classification System | Classification Symbols |
|---|---|
| IPC | G05B19/403, 19/405 |

### Documentation Searched other than Minimum Documentation to the Extent that such Documents are Included in the Fields Searched ⁸

| | |
|---|---|
| Jitsuyo Shinan Koho | 1971 – 1990 |
| Kokai Jitsuyo Shinan Koho | 1971 – 1990 |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| A | JP, A, 60-128508 (Fanuc Ltd.), 9 July 1985 (09. 07. 85), (Family: none) | 1, 2 |
| A | JP, A, 60-57405 (Fanuc Ltd.), 3 April 1985 (03. 04. 85), (Family: none) | 1, 2 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| September 7, 1990 (07. 09. 90) | September 25, 1990 (25. 09. 90) |

| International Searching Authority | Signature of Authorized Officer |
|---|---|
| Japanese Patent Office | |

Form PCT/ISA/210 (second sheet) (January 1985)